# EUROPÄISCHE PATENTSCHRIFT

(11) **EP 3 261 218 B1**
(45) Veröffentlichungstag und Bekanntmachung des Hinweises auf die Patenterteilung: **13.11.2019**
(21) Anmeldenummer: 17176833.6
(22) Anmeldetag: 20.06.2017
(51) Int. Cl.: H02K 1/20

(54) **STATOR FÜR EINEN ELEKTROMOTOR**
STATOR FOR AN ELECTRIC MOTOR
STATOR POUR UN MOTEUR ÉLECTRIQUE

(30) Priorität: 20.06.2016 DE 102016111263
(43) Veröffentlichungstag der Anmeldung: 27.12.2017
(73) Patentinhaber: Peiseler GmbH & Co. KG, 42855 Remscheid (DE)
(72) Erfinder: Kleinen, Christian, 58285 Gevelsberg (DE); Neumann, Jürgen, 42897 Remscheid (DE); Schaupp, Olaf, 58089 Hagen (DE); Korischem, Benedict, 40489 Düsseldorf (DE)
(74) Vertreter: Gesthuysen Patent- und Rechtsanwälte

(56) Entgegenhaltungen:
- EP-A1- 2 521 246
- EP-A2- 2 003 764
- WO-A1-2006/086816
- WO-A1-2010/081216
- DE-A1- 10 005 128

## Beschreibung

Die Erfindung betrifft einen Stator für einen Elektromotor, mit mehreren ringförmigen Blechen, die zusammen ein Stator-Blechpaket bilden, mit mehreren Kühlrohren und mit mehreren Statorwicklungen, wobei in den einzelnen Blechen jeweils mehrere über den Umfang verteilt angeordnete Nuten zur Aufnahme der Statorwicklungen und mehrere ebenfalls über den Umfang verteilt angeordnete Ausnehmungen zur Aufnahme der Kühlrohre ausgebildet sind, wobei an den beiden Stirnseiten des Stator-Blechpakets jeweils ein Abschlusselement angeordnet ist und in den beiden Abschlusselementen mehrere Kühlkanäle ausgebildet sind, über die jeweils zwei in Umfangsrichtung nebeneinander angeordnete Kühlrohre strömungstechnisch miteinander verbunden sind.

Zum Antrieb von Werkzeugmaschinen, wie beispielsweise Rundtischen, Schwenktischen oder Schwenkeinrichtungen, werden häufig Elektromotoren als Direktantriebe eingesetzt. Dabei haben sich insbesondere Torquemotoren bewährt, da sie in der Lage sind, hohe Drehmomente zu erzeugen. Torquemotoren arbeiten wie normale Synchronmotoren, wobei sie jedoch eine hohe Anzahl an Spulen bzw. Polen aufweisen, wodurch sie in der Lage sind, auch bei geringen Geschwindigkeiten ein hohes Drehmoment zu erreichen. Ein weiterer Vorteil von Torquemotoren ist ihre kompakte Bauweise und ihr großer Innendurchmesser, was ebenfalls zur Erzielung des hohen Drehmoments beiträgt. Durch das gewünschte hohe Drehmoment und die damit verbundenen hohen Ströme durch die Statorwicklungen entsteht jedoch auch eine relativ hohe Verlustleistung in den Statorwicklungen in Form von Wärme, die durch geeignete Kühlmaßnahmen abgeführt werden muss.

Daher werden Elektromotoren seit langem mit entsprechenden Kühlmedien, insbesondere Kühlwasser gekühlt. Hierzu kann der Elektromotor von einem zusätzlichen Kühlmantel umgeben sein, in dem entsprechende Kühlkanäle ausgebildet sind, durch die das Kühlwasser fließen kann. Nachteilig ist hierbei jedoch, dass der Kühlmantel zusätzliche Kosten verursacht und sich durch die Verwendung des Kühlmantels der vom Elektromotor benötigte Bauraum vergrößert. Außerdem weisen die in dem Kühlmantel ausgebildeten Kühlkanäle einen relativ großen Abstand zu den Statorwicklungen auf, in denen die Verlustleistung auftritt, so dass der Wärmeübergang relativ schlecht und damit die Kühlwirkung begrenzt ist.

Daher werden seit vielen Jahren Elektromotoren verwendet, bei denen die Kühlkanäle nicht in einem separaten Kühlmantel sondern direkt im Stator ausgebildet sind. Da der Stator eines Elektromotors zur Reduzierung von Wirbelstromverlusten üblicherweise geblecht ausgeführt ist, also aus einer Mehrzahl von ringfömigen Blechen besteht, die zusammen ein Stator-Blechpaket bilden, müssen zur Gewährleistung einer ausreichenden Dichtigkeit des Kühlsystems separate Kühlrohre verwendet werden, die in entsprechenden Ausnehmungen in den einzelnen Blechen bzw. im Stator-Blechpaket angeordnet sind. Damit der Montageaufwand beim Durchschieben der Kühlrohre durch die Ausnehmungen der einzelnen Bleche bzw. beim Einschieben in die durch die Ausnehmungen gebildeten Kanäle im Stator-Blechpaket nicht so groß ist, weisen die einzelnen Kühlrohre einen etwas geringeren Durchmesser als die in den einzelnen Blechen ausgebildeten Ausnehmungen auf. Um dabei einen möglichst guten Wärmeübergang zwischen den einzelnen Blechen und den Kühlrohren zu gewährleisten, ist es bekannt, den Luftspalt zwischen den Ausnehmungen und den Kühlrohren mit einer wärmeleitenden Kunststoffmasse zu vergießen.

Ein Elektromotor mit einem im Stator angeordneten Kühlsystem ist beispielsweise aus der DE 197 49 108 C1 bekannt. Bei diesem bekannten Stator weisen die einzelnen Statorbleche nach außen offene Nuten auf, in denen die Kühlrohre angeordnet sind. Die Kühlrohre sind mit dem Stator-Blechpaket und den an den Stirnseiten des Stator-Blechpakets angeordneten Wicklungsköpfen der Statorwicklungen durch eine wärmeleitende Vergussmasse verbunden. Die in den einzelnen Kühlnuten angeordneten Kühlrohre sind an den Stirnseiten des Stator-Blechpakets miteinander verbunden, so dass das Kühlsystem insgesamt mäanderförmig ausgebildet ist. Nachteilig ist dabei jedoch, dass der relativ große Biegeradius im Verbindungsbereich der einzelnen Kühlrohre dazu führt, dass die einzelnen, sich in axialer Richtung erstreckenden Kühlrohre in Umfangsrichtung einen relativ großen Abstand zueinander aufweisen, wodurch die Kühlwirkung begrenzt ist. Darüber hinaus ist die Montage des mäanderförmigen Kühlsystems relativ aufwendig, insbesondere dann, wenn die Breite der Kühlnuten nur geringfügig größer als der Durchmesser der Kühlrohre ist, was zur Erzielung eines guten Wärmeübergangs von den Blechen zu den Kühlrohren erforderlich ist.

Die EP 2 521 246 A1 offenbart eine Statoranordnung für eine elektrische Maschine, die einen Stator mit einem Statorpaket, das eine Anzahl von benachbart angeordneten Metallplatten aufweist, und eine Kühleinrichtung in Form mehrerer Kühlrohre aufweist. Die Kühlrohre erstrecken sich durch entsprechende Bohrungen innerhalb des Statorpakets, die alle den gleichen Abstand zur Mittelachse des Stators aufweisen, so dass die Bohrungen entlang des Umfangs eines Ringes angeordnet sind. An den jeweiligen Endplatten des Statorpakets sind mehrere Kühlverteiler angebracht, über die die einzelnen Kühlrohre strömungstechnisch miteinander verbunden sind, so dass ein geschlossener Kühlkreislauf entsteht. Die Kühlverteiler weisen dabei jeweils die Form eines Ringsegments auf, wobei in Umfangsrichtung nebeneinander angeordnete Kühlverteiler einander teilweise überlappen. Da die Kühlverteiler in einer Ebene liegen und teilweise in radialer Richtung alternierend ineinandergreifen, ist die Anordnung der Kühlverteiler mit Aufwand verbunden. Darüber hinaus weisen die Kühlverteiler teilweise nur einen relativ geringen Querschnitt auf, wodurch die Zirkulation der Kühlflüssigkeit behindert werden kann.

Die EP 2 003 764 A2 offenbart einen Schienenfahrzeug-Direktantrieb für ein Fahrzeugrad in Form eines Außenläufer-Motors, mit einem Rotor und einem Stator. Der Rotor sitzt in einem Radreifen, mit dem er antriebsmäßig verbunden ist. Der Stator weist eine Achse auf, auf der ein Blechpaket mit Nuten zur Aufnahme von Wicklungen sitzt. Außerderm weist der Stator eine Flüssigkeitskühlung auf, wozu im Blechpaket des Stators Öffnungen ausgebildet sind, in denen sich Kühlrohre aus antimagnetischem Stahl befinden, die an ihren Enden mit Kühlmittelverteilungsringen aus antimagnetischem Stahl verschweißt sind. In den Kühlmittelverteilungsringen sind mehrere nierenförmige Vertiefungen ausgebildet, über die benachbart zueinander angeordnete Kühlrohre strömungstechnisch miteinander verbunden sind, so dass das Kühlmittel durch die einzelnen Kühlrohre mäanderförmig hin- und herflie-ßen kann. Da die Vertiefungen stirnseitig offen sind, sind die Kühlmittelverteilungsringe auf ihrer den Kühlrohren abgewandten Seite mittels separater Verschlussringe zugeschweißt, wodurch zur Fertigstellung des Kühlsystems ein weiterer Arbeitsschritt erforderlich ist.

Der vorliegenden Erfindung liegt daher die Aufgabe zugrunde, einen Stator für einen Elektromotor zur Verfügung zu stellen, bei dem auf möglichst einfache Art und Weise eine hohe Kühlwirkung erzielt werden kann. Dabei soll auch die Montage des Stators möglichst einfach erfolgen können.

Diese Aufgabe ist bei dem erfindungsgemäßen Stator mit den Merkmalen des Patentanspruchs 1 dadurch gelöst, dass dass die Kühlkanäle jeweils zwei unter einem Winkel α zueinander verlaufende Abschnitte aufweisen, wobei die beiden Abschnitte auf der der Stirnseite des Stator-Blechpakets zugewandten Seite den größten Abstand zueinander aufweisen und auf der der Stirnseite des Stator-Blechpakets abgewandten Seite miteinander verbunden sind. Der Kühlkanal ist dabei vorzugsweise V-förmig ausgebildet.

Die beiden unter einem Winkel zueinander und auch unter einem Winkel zur Längserstreckung der Kühlrohre verlaufenden Abschnitt können einfach mittels entsprechender Bohrvorrichtungen als Querbohrungen automatisiert in die Abschlusselement eingebracht werden. Der Winkel α zwischen den beiden Abschnitten der einzelnen Kühlkanäle beträgt dabei vorzugsweise weniger als 90°, was dazu führt, dass zwei in Umfangsrichtung nebeneinander angeordnet Kühlrohre einen geringen Abstand zueinander aufweisen können.

Bei dem erfindungsgemäßen Stator kann auf die Verwendung von separaten Umlenkböden, die mit den einzelnen geraden Kühlrohren verbunden werden müssen, verzichtet werden. Auch die Verwendung einer mäanderförmigen Kühlschlange, bei der die einzelnen geraden Kühlrohrabschnitte bereits vor dem Einbringen in das Stator-Blechpaket miteinander verbunden sind, ist nicht erforderlich. Die Ausbildung der die einzelnen Kühlrohre verbindenden Kühlkanäle in den Abschlusselementen, bei denen es sich beispielsweise um stirnseitige Motorflansche handeln kann, weist den Vorteil auf, dass die Form der Kühlkanäle in den Abschlusselementen entsprechend den jeweiligen Anforderungen ausgeführt sein kann. Die Kühlkanäle können insbesondere so ausgestaltet sein, dass die einzelnen Kühlrohre in Umfangsrichtung des Stators mit geringem Abstand zueinander angeordnet sein können, so dass eine große Anzahl an Kühlrohren verwendet werden kann, wodurch sich eine entsprechend gute Kühlwirkung ergibt.

Gemäß einer vorteilhaften Ausgestaltung des erfindungsgemäßen Stators weisen die einzelnen Kühlrohre eine größere Länge als das Stator-Blechpaket auf, so dass die Kühlrohre mit ihren Enden auf beiden Stirnseiten des Stator-Blechpakets überstehen und jeweils in die Kühlkanäle in den Abschlusselementen hineinragen. Hierdurch kann auf besonders einfache Art und Weise eine gute Verbindung zwischen den einzelnen Kühlrohren und den in den Abschlusselementen ausgebildeten Kühlkanälen hergestellt werden. Die Kühlkanäle weisen dazu auf der dem Stator-Blechpaket zugewandten Stirnseite der Abschlusselemente jeweils zwei Bohrungen auf, die in Längsrichtung der Kühlrohre ausgerichtet sind, so dass die Enden zweier in Umfangsrichtung nebeneinander angeordneter Kühlrohre jeweils in eine Bohrung eingeführt bzw. ein Abschlusselement mit den beiden Bohrungen auf zwei Kühlrohre aufgesteckt werden kann.

Zur Gewährleistung einer ausreichenden Dichtigkeit beim Übergang von den Kühlrohren zu den Kühlkanälen sind in den Abschlusselementen vorzugsweise ringförmige Dichtungsnuten ausgebildet, die die Enden der Kühlrohre bzw. der Bohrungen konzentrisch umschließen, wobei in den Dichtungsnuten jeweils ein Dichtelement, insbesondere ein O-Ring angeordnet ist. Dadurch wird verhindert, dass Kühlflüssigkeit entlang des Außenumfangs der Kühlrohre in einen möglichen Spalt zwischen den Kühlrohren und den Ausnehmungen in den Statorblechen gelangen kann.

Wie zuvor ausgeführt worden ist, ist durch die erfindungsgemäße Ausgestaltung der Kühlkanäle in den beiden Abschlusselementen die Möglichkeit geschaffen worden, dass die einzelnen Kühlrohre mit geringem Abstand zueinander angeordnet sind. Der erfindungsgemäße Stator kann dann eine große Anzahl an Kühlrohren aufweisen, was entsprechend zu einer verbesserten Abfuhr der durch die Verlustleistung in den Staltorwicklungen entstehenden Wärme führt. Gemäß einer vorteilhaften Ausgestaltung weist der erfindungsgemäße Stator genauso viele Kühlrohre wie Statorwicklungen auf, so dass die Anzahl der in den einzelnen Blechen ausgebildeten Nuten zur Aufnahme der Statorwicklungen der Anzahl der Ausnehmungen zur Aufnahme der Kühlrohre entspricht. Die Ausnehmungen für die Kühlrohre sind dabei vorzugsweise in Umfangsrichtung der Bleche zwischen zwei Nuten und radial nach außen versetzt zu den Nuten angeordnet. Dies führt dazu, dass die Kühlrohre im Stator-Blechpaket zwischen zwei Statorwicklungen angeordnet sind, was den Vorteil hat, dass in diesem Bereich das magnetische Feld zwischen den einzelnen Statorwicklungen am geringsten ist, so dass eine durch die Anordnung der Kühlrohre bedingte Schwächung des magnetischen Feldes minimal ist. Durch die zuvor beschriebene bevorzugte Anordnung der Ausnehmungen in den einzelnen Blechen relativ zu den Nuten wird die Möglichkeit geschaffen, dass die einzelnen Kühlrohre einen möglichst geringen Abstand zu den Statorwicklungen aufweisen, was zu einer besonders effektiven Abführung der in der Statorwicklung durch Verlustleistung erzeugten Wärme führt. Gleichzeitig wird durch die Anordnung der Kühlrohre zwischen den einzelnen Statorwicklungen im Bereich geringer magnetischer Feldstärke eine Schwächung des magnetischen Feldes durch in den Kühlrohren entstehende Wirbelstromverluste minimiert.

Um einen möglichst guten Wärmeübergang von den einzelnen Blechen zu den einzelnen Kühlrohren zu ermöglichen, können die Rohre in einseitig offene Ausnehmungen und dort mit Hilfe von wärmeleitfähiger Vergussmasse befestigt oder verlötet werden. Gemäß einer bevorzugten Ausgestaltung sind die Ausnehmungen in den Blechen jedoch als geschlossene Bohrungen ausgebildet, durch die die Kühlrohre durchgeführt sind. Die Ausnehmungen und die Kühlrohre weisen dabei vorzugsweise jeweils einen kreisförmigen Querschnitt auf, wobei im fertig montierten Zustand des Stators der Außendurchmesser der Kühlrohre dem Innendurchmesser der Ausnehmungen entspricht. Hierdurch wird ein besonders guter Wärmeübergang zwischen den Kühlrohren und den einzelnen Blechen erreicht, da es zu einem voll umfänglichen Kontakt zwischen den Kühlrohren und der Innenwandung der Ausnehmungen kommt. Damit dabei die Kühlrohre möglichst einfach durch die einzelnen Ausnehmungen in den Blechen durchgeführt werden können, ist gemäß einer bevorzugten Ausgestaltung vorgesehen, dass die Kühlrohre nach dem Einführen in die Ausnehmungen mit Hilfe eines speziellen Werkzeugs aufgeweitet werden, so dass über die bleibende Verformung der Kühlrohre eine Anpressung der Kühlrohre an die Innenwandung der Ausnehmungen erfolgt.

Das Verfahren zur Herstellung eines erfindungsgemäßen Stators weist gemäß Patentanspruch 9 als einen ersten Schritt zunächst das Einführen der Kühlrohre in die Ausnehmungen in den zum Stator-Blechpaket miteinander verbundenen Blechen auf, wobei der Außendurchmesser der einzelnen Kühlrohre kleiner ist als der Innendurchmesser der Ausnehmungen in den einzelnen Blechen. Anschließend werden die einzelnen Kühlrohre mit Hilfe eines speziellen Werkzeugs, insbesondere einer Kugel, die durch die Kühlrohre gedrückt wird, aufgeweitet, so dass der Außendurchmesser der Kühlrohre dem Innendurchmesser der Ausnehmungen entspricht und die Kühlrohre an der Innenwandung der einzelnen Ausnehmungen anliegen. Da die einzelnen Kühlrohre beim Einführen in das Stator-Blechpaket zunächst einen geringeren Außendurchmesser als die Ausnehmungen aufweisen, ist das Einführen der Kühlrohre in die Ausnehmungen mit geringem Aufwand möglich, auch wenn die einzelnen Bleche des Stator-Blechpakets und damit auch die einzelnen Ausnehmungen unter Umständen einen geringen Versatz in Axialrichtung des Stators zueinander aufweisen.

Neben dem zuvor beschriebenen Stator betrifft die Erfindung auch einen Elektromotor mit einem erfindungsgemäßen Stator und einem entsprechenden Rotor, wobei der Rotor vom Stator konzentrisch umgeben ist und am Außenumfang des Rotors eine Mehrzahl von Magneten angeordnet ist. Bei dem Elektromotor kann es sich dabei insbesondere um einen eingangs beschriebenen Torquemotor handeln, der kein zusätzliches Gehäuse aufweist. Dadurch weist der Elektromotor insgesamt eine relativ geringe Baugröße auf, die insbesondere von dem gewollten maximalen Drehmoment bestimmt wird, das proportional zum Radius des Luftspalts zwischen dem Stator und dem Rotor ist.

Im Einzelnen gibt es nun eine Vielzahl von Möglichkeiten, den erfindungsgemäßen Stator auszugestalten und weiterzubilden. Dazu wird verwiesen sowohl auf die dem Patentanspruch 1 nachgeordneten Patentansprüche, als auch auf die nachfolgende Beschreibung von Ausführungsbeispielen in Verbindung mit der Zeichnung. In der Zeichnung zeigen
- Fig. 1: eine perspektivische Darstellung einer Ausführung eines erfindungsgemäßen Stators,
- Fig. 2: einen Stator im Längsschnitt,
- Fig. 3: einen Ausschnitt des Stators, im Schnitt,
- Fig. 4: einen Ausschnitt eines Bleches des Stator-Blechpakets eines erfindungsgemäßen Stators, und
- Fig. 5: einen Ausschnitt einer zweiten Variante eines Bleches des Stator-Blechpakets eines erfindungsgemäßen Stators.

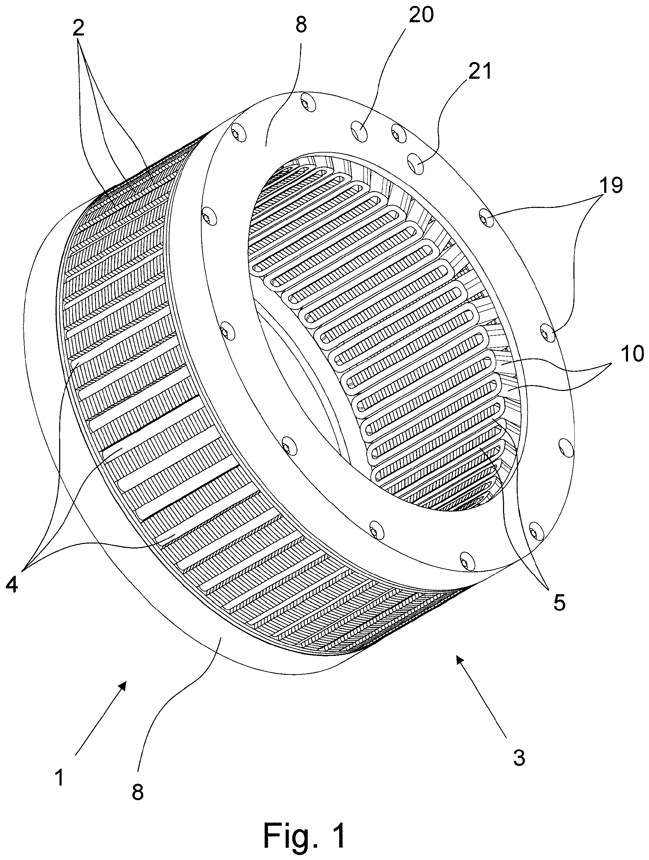

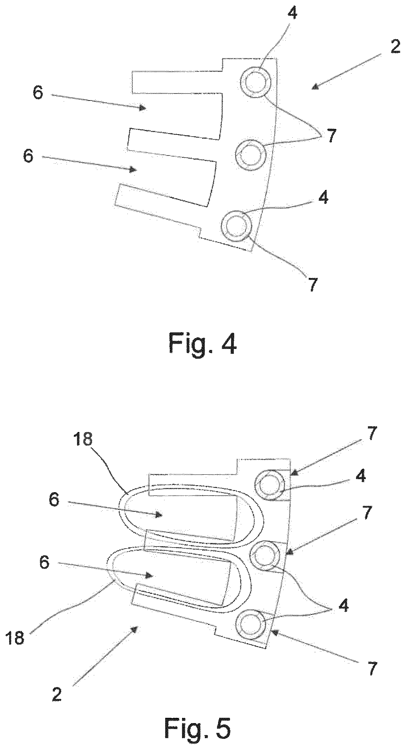

Fig 1 zeigt eine perspektivische Darstellung eines erfindungsgemäßen Stators 1, der eine Mehrzahl von ringförmigen Blechen 2 aufweist, die zusammen das Stator-Blechpaket 3 bilden. Der Stator 1 weist darüber hinaus eine Mehrzahl von Kühlrohren 4 und Statorwicklungen 5 auf, die in dem Stator-Blechpaket 3 angeordnet bzw. gehalten sind. Hierzu sind in den einzelnen Blechen 2 jeweils eine Mehrzahl von über dem Umfang des Stators 1 bzw. der Bleche 2 verteilt angeordneten Nuten 6 zur Aufnahme der Statorwicklungen 5 und eine Mehrzahl von ebenfalls über den Umfang verteilt angeordneten Ausnehmungen 7 zur Aufnahme der Kühlrohre 4 ausgebildet, wie dies auch aus Fig. 5 ersichtlich ist.

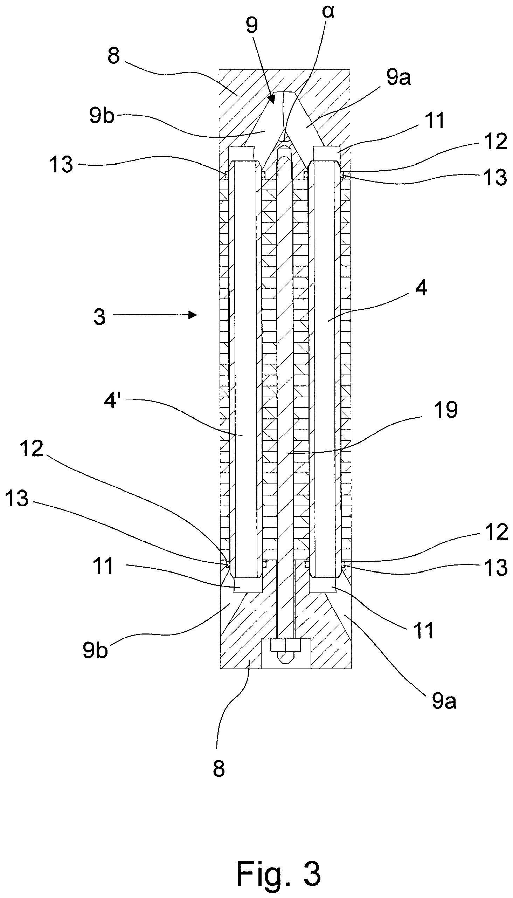

Bei dem erfindungsgemäßen Stator 1 ist an den beiden Stirnseiten des Stator-Blechpakets 3 darüber hinaus jeweils ein Abschlusselement 8 befestigt, welches auch aus Statorflansch bezeichnet werden kann. In den beiden Abschlusselementen 8 ist jeweils eine Mehrzahl von Kühlkanälen 9 ausgebildet, über die jeweils zwei in Umfangsrichtung nebeneinander angeordnete Kühlrohre 4, 4' strömungstechnisch miteinander verbunden sind, wie dies aus den Fig. 3 und 4 ersichtlich ist. Durch die einzelnen Kühlrohre 4 und die zwischen den Kühlrohren 4 in den beiden Abschlusselementen 8 versetzt zueinander angeordneten Kühlkanäle 9 ist somit eine mäanderförmig verlaufende Kühlleitung realisiert, über die eine besonders effektive Abfuhr der durch die Verlustleistung in den Statorwicklungen 5 erzeugten Wärme aus dem Inneren des Stators 1 ermöglicht ist. Über die in den Abschlusselementen 8 ausgebildeten Kühlkanäle 9 erfolgt dabei eine Umlenkung des Kühlwasserstromes von dem einen Kühlrohr 4 zum benachbart dazu angeordneten nächsten Kühlrohr 4'. Die Umlenkung des Kühlwasserstromes in den Abschlusselementen 8 führt dabei auch zu einer Kühlung der Abschlusselemente 8, was besonders vorteilhaft ist, da die Abschlusselemente 8 auch die an den Stirnseiten des Stator-Blechpakets 3 überstehenden Wicklungsköpfe 10 der Statorwicklungen 5 aufnehmen. Eine besonders effektive Kühlung der Statorwicklungen 5 und insbesondere der besonders heißen Wicklungsköpfe 10 ist dabei dadurch erreichbar, dass die Wicklungsköpfe 10 in den Abschlusselementen 8 mit einer wärmeleitenden Kunststoffmasse vergossen sind.

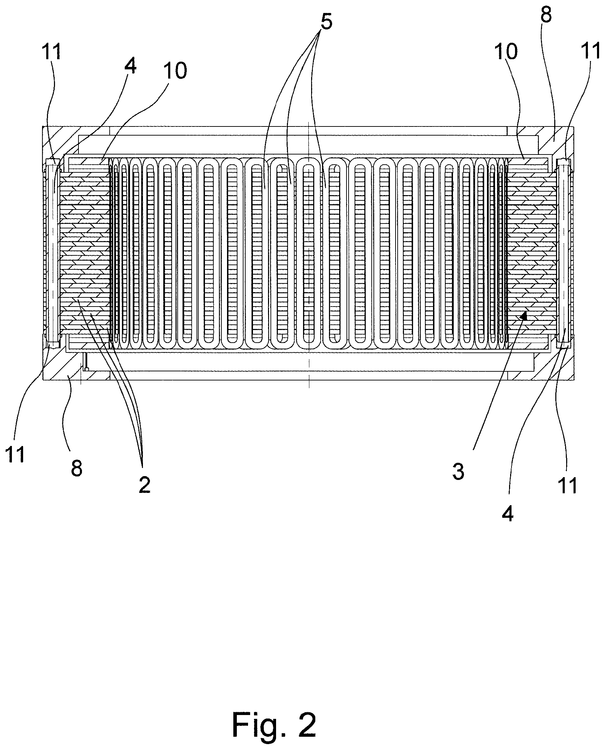

Wie aus den Fig. 2 und 3 ersichtlich ist, weisen die einzelnen Kühlrohre 4, 4' eine größere Länge als das Stator-Blechpaket 3 auf, so dass die Kühlrohre 4, 4' mit ihren Enden auf beiden Stirnseiten der Stator-Blechpakete 3 überstehen. Die Enden der Kühlrohre 4, 4' ragen somit in die jeweiligen Kühlkanäle 9 in den Abschlusselementen 8 hinein, wozu die Kühlkanäle 9 jeweils zwei Bohrungen 11 auf der dem Stator-Blechpaket 3 zugewandten Stirnseite der Abschlusselemente 8 aufweisen. Die Bohrungen 11 erstrecken sich in Längsrichtung der Kühlrohre 4, 4', so dass die Enden zweier in Umfangsrichtung nebeneinander angeordneter Kühlrohre 4, 4' jeweils in eine Bohrung 11 hineinragen.

Zur Abdichtung des Übergangs zwischen den Enden der Kühlrohre 4, 4' und den Kühlkanälen 9 sind auf der dem Stator-Blechpaket 3 zugewandten Stirnseite der Abschlusselemente 8 ringförmige Dichtungsnuten 12 ausgebildet, die die Bohrungen 11 bzw. die in den Bohrungen 11 eingeführten Enden der Kühlrohre 4, 4' konzentrisch umschließen. Wie aus Fig. 3 ersichtlich ist, sind in den Dichtungsnuten 12 entsprechende O-Ringe 13 angeordnet, so dass verhindert wird, dass Kühlflüssigkeit außerhalb der Kühlrohre 4, 4' durch das Stator-Blechpaket 3 fließt.

Bei der in Fig. 3 dargestellten Ausgestaltung des erfindungsgemäßen Stators 1 weist ein Kühlkanal 9 zwei unter einem Winkel α zueinander verlaufende Abschnitte 9a, 9b auf, wobei die Abschnitte 9a, 9b auch unter einem Winkel zur Längserstreckung der Kühlrohre 4, 4' verlaufen, so dass der Kühlkanal 9 insgesamt V-förmig ausgebildet ist. Vorzugsweise beträgt der Winkel α zwischen den beiden Abschnitten 9a, 9b weniger als 90°, so dass die Kühlrohre 4, 4' mit geringem Abstand zueinander angeordnet sein können.

Aus der Darstellung eines Ausschnitts eines einzelnen Blechs 2 des Stator-Blechpakets 3 gemäß Fig. 4 ist erkennbar, dass die Ausnehmungen 7 für die einzelnen Kühlrohre 4, 4' in Umfangsrichtung der Bleche 2 zwischen zwei Nuten 6 und radial nach außen versetzt zu den Nuten 6 angeordnet sind. Dadurch wird erreicht, dass die Kühlrohre 4 im Stator-Blechpaket zwischen zwei Statorwicklungen 5 angeordnet sind, wo das magnetische Feld am geringsten ist, wie dies anhand der in Fig. 5 eingezeichneten magnetischen Feldlinien dargestellt ist. Während bei dem in Fig. 4 dargestellten Ausführungsbeispiel eines Bleches 2 die Ausnehmungen 7 für die Kühlrohre 4, 4' als geschlossene Bohrungen ausgebildet sind, sind bei dem in Fig. 5 dargestellten Ausführungsbeispiel eines Bleches 2 die Ausnehmungen 7 als radial sich erstreckende Nuten ausgebildet, so dass die Ausnehmungen 7 nach außen offen sind. Bei einer derartigen Ausgestaltung der Ausnehmungen 7 sind die Kühlrohre 4, 4' vorzugsweise mittels einer wärmeleitenden Kunststoffmasse in den Ausnehmungen 7 fixiert.

Damit der Stator 1 eine ausreichend hohe Stabilität aufweist, so dass er auch ohne ein zusätzliches äußeres Gehäuse eingesetzt werden kann, sind die einzelnen Bleche 2 des Stator-Blechpakets 3 vorzugsweise miteinander verklebt oder vergossen. Darüber hinaus sind mehrere Zugstangen 19 vorgesehen, die das Stator-Blechpaket 3 und die beiden Abschlusselemente 8 miteinander verspannen. Aus Fig. 1 ist schließlich noch erkennbar, dass bei dem erfindungsgemäßen Stator 1 der Kühlwasserzulauf 20 und der Kühlwasserablauf 21 an derselben Stirnseite des Stators 1 bzw. an der Stirnseite eines Abschlusselements 8 ausgebildet sind. Dadurch vereinfacht sich in der Regel der Anschluss des Kühlkreislaufes des Stators 1 an einen externen Wärmetauscher oder Kühler. Grundsätzlich ist es jedoch auch möglich, dass der Kühlwasserzulauf 20 und der Kühlwasserablauf 21 an gegenüberliegenden Seiten des Stators 1 ausgebildet sind, so dass in dem einen Abschlusselement 8 der Kühlwasserzulauf 20 und in dem anderen, gegenüber liegenden Abschlusselement 8 der Kühlwasserablauf 21 ausgebildet ist.

## Patentansprüche

1. Stator (1) für einen Elektromotor, mit mehreren ringförmigen Blechen (2), die zusammen ein Stator-Blechpaket (3) bilden, mit mehreren Kühlrohren (4, 4') und mit mehreren Statorwicklungen (5), wobei in den einzelnen Blechen (2) jeweils mehrere über den Umfang verteilt angeordnete Nuten (6) zur Aufnahme der Statorwicklungen (5) und mehrere ebenfalls über den Umfang verteilt angeordnete Ausnehmungen (7) zur Aufnahme der Kühlrohre (4, 4') ausgebildet sind,
wobei an den beiden Stirnseiten des Stator-Blechpakets (3) jeweils ein Abschlusselement (8) angeordnet ist und in den beiden Abschlusselementen (8) mehrere Kühlkanäle (9) ausgebildet sind, über die jeweils zwei in Umfangsrichtung nebeneinander angeordnete Kühlrohre (4, 4') strömungstechnisch miteinander verbunden sind,
**dadurch gekennzeichnet,**
**dass** die Kühlkanäle (9) jeweils zwei unter einem Winkel α zueinander verlaufende Abschnitte (9a, 9b) aufweisen, wobei die beiden Abschnitte (9a, 9b) auf der der Stirnseite des Stator-Blechpakets (3) zugewandten Seite den größten Abstand zueinander aufweisen und auf der der Stirnseite des Stator-Blechpakets (3) abgewandten Seite miteinander verbunden sind.

2. Stator (1) nach Anspruch 1, **dadurch gekennzeichnet, dass** der Winkel α zwischen den Abschnitten (9a, 9b) weniger als 90° beträgt.

3. Stator (1) nach Anspruch 1 oder 2, **dadurch gekennzeichnet, dass** die einzelnen Kühlrohre (4, 4') eine größere Länge als das Stator-Blechpaket (3) aufweisen, dass sie mit ihren Enden auf beiden Stirnseiten des Stator-Blechpakets (3) überstehen und jeweils in die Kühlkanäle (9) in den Abschlusselementen (8) hineinragen.

4. Stator (1) nach einem der Ansprüche 1 bis 3, **dadurch gekennzeichnet, dass** in den Abschlusselementen (8) ringförmige Dichtungsnuten (12) ausgebildet sind, die die Enden der Kühlrohre (4, 4') konzentrisch umschließen und dass in den Dichtungsnuten (12) jeweils ein Dichtelement, insbesondere ein O-Ring (13) angeordnet ist.

5. Stator (1) nach einem der Ansprüche 1 bis 4, **dadurch gekennzeichnet, dass** in den einzelnen Blechen (2) genauso viele Nuten (6) wie Ausnehmungen (7) ausgebildet sind und dass die Ausnehmungen (7) in Umfangsrichtung der Bleche (2) zwischen zwei Nuten (6) und radial nach außen versetzt zu den Nuten (6) angeordnet sind.

6. Stator (1) nach einem der Ansprüche 1 bis 5, **dadurch gekennzeichnet, dass** die Kühlrohre (4, 4') und die Ausnehmungen (7) in den Blechen (2) jeweils einen kreisförmigen Querschnitt aufweisen und dass der Außendurchmesser der Kühlrohre (4, 4') dem Innendurchmesser der Ausnehmungen (7) entspricht, wobei über eine Verformung der Kühlrohre (4, 4') eine Anpreisung der Kühlrohre (4, 4') an die Ausnehmungen (7) erfolgt ist.

7. Stator (1) nach einem der Ansprüche 1 bis 6, **dadurch gekennzeichnet, dass** die einzelnen Bleche (2) miteinander verklebt und/oder vergossen sind.

8. Stator (1) nach einem der Ansprüche 1 bis 7, **dadurch gekennzeichnet, dass** das Stator-Blechpaket (3) und die beiden Abschlusselemente (8) über Zugstangen (19) miteinander verspannt sind.

9. Verfahren zur Herstellungen eines Stators (1) nach Anspruch 6, **dadurch gekennzeichnet, dass** die Kühlrohre (4, 4'), die zunächst einen Außendurchmesser aufweisen, der kleiner als der Innendurchmesser der Ausnehmungen (7) in den Blechen (2) ist, in die Ausnehmungen (7) in den zum Stator-Blechpaket (3) miteinander verbunden Blechen (2) eingeführt werden und anschließend die einzelnen Kühlrohre (4, 4') mit Hilfe eines speziellen Werkzeugs, insbesondere einer Kugel, aufgeweitet werden, so dass der Außendurchmesser der Kühlrohre (4, 4') dem Innendurchmesser der Ausnehmungen (7) entspricht und die Kühlrohre (4, 4') an der Innenwandung der einzelnen Ausnehmungen (7) anliegen.

10. Elektromotor mit einem Stator (1) nach einem der Ansprüche 1 bis 8 und einem Rotor, der von dem Stator (1) konzentrisch umgeben ist, wobei am Außenumfang des Rotors eine Mehrzahl von Magneten angeordnet ist.

## Claims

1. Stator (1) for an electric motor, comprising a plurality of annular laminations (2) which together form a stator laminated core (3), comprising a plurality of cooling pipes (4, 4') and comprising a plurality of stator windings (5), wherein a plurality of slots (6), which are arranged distributed over the periphery, for receiving the stator windings (5) and a plurality of recesses (7), which are likewise arranged distributed over the periphery, for receiving the cooling pipes (4, 4') are formed in the individual laminations (2),
wherein a termination element (8) is arranged on each of the two end sides of the stator laminated core (3) and a plurality of cooling ducts (9) are formed in the two termination elements (8), in each case two cooling pipes (4, 4') which are arranged next to one another in the peripheral direction being flow-connected to one another by means of the said cooling ducts (4, 4'),
**characterized in**
**that** the cooling ducts (9) each have two sections (9a, 9b) which run at an angle α in relation to one another, wherein the two sections (9a, 9b) are at the greatest distance from one another on that side which faces the end side of the stator laminated core (3) and are connected to one another on that side which is averted from the end side of the stator laminated core (3).

2. Stator (1) according to Claim 1, **characterized in that** the angle α between the sections (9a, 9b) is smaller than 90°.

3. Stator (1) according to Claim 1 or 2, **characterized in that** the individual cooling pipes (4, 4') have a greater length than the stator laminated core (3), **in that** they protrude, by way of their ends, on both end sides of the stator laminated core (3) and each project into the cooling ducts (9) in the termination elements (8).

4. Stator (1) according to one of Claims 1 to 3, **characterized in that** annular sealing grooves (12) are formed in the termination elements (8), the said sealing grooves concentrically surrounding the ends of the cooling pipes (4, 4'), and **in that** a sealing element, in particular an O-ring (13), is arranged in each of the sealing grooves (12).

5. Stator (1) according to one of Claims 1 to 4, **characterized in that** exactly as many slots (6) as recesses (7) are formed in the individual laminations (2), and **in that** the recesses (7) are arranged between two slots (6) in the peripheral direction of the laminations (2) and are arranged offset radially outwards in relation to the slots (6).

6. Stator (1) according to one of Claims 1 to 5, **characterized in that** the cooling pipes (4, 4') and the recesses (7) in the laminations (2) each have a circular cross section, and **in that** the outside diameter of the cooling pipes (4, 4') corresponds to the inside diameter of the recesses (7), wherein the cooling pipes (4, 4') have been pressed against the recesses (7) by means of deformation of the cooling pipes (4, 4').

7. Stator (1) according to one of Claims 1 to 6, **characterized in that** the individual laminations (2) are adhesively bonded and/or cast with one another.

8. Stator (1) according to one of Claims 1 to 7, **characterized in that** the stator laminated core (3) and the two termination elements (8) are braced to one another by means of tie rods (19).

9. Method for the production of a stator (1) according to Claim 6, **characterized in that** the cooling pipes (4, 4'), which initially have an outside diameter which is smaller than the inside diameter of the recesses (7) in the laminations (2), are inserted into the recesses (7) in the laminations (2) which are connected to one another to form the stator laminated core (3), and the individual cooling pipes (4, 4') are then widened with the aid of a special tool, in particular a ball, so that the outside diameter of the cooling pipes (4, 4') corresponds to the inside diameter of the recesses (7) and the cooling pipes (4, 4') rest against the inner wall of the individual recesses (7).

10. Electric motor comprising a stator (1) according to one of Claims 1 to 8 and a rotor which is concentrically surrounded by the stator (1), wherein a plurality of magnets is arranged on the outer periphery of the rotor.

## Revendications

1. Stator (1) pour un moteur électrique, avec plusieurs tôles annulaires (2), qui forment ensemble un paquet de tôles de stator (3), avec plusieurs tubes de refroidissement (4, 4') et avec plusieurs enroulements de stator (5), dans lequel sont formés dans les tôles individuelles (2) respectivement plusieurs rainures (6) disposées de façon répartie sur la périphérie pour le logement des enroulements de stator (5) et plusieurs évidements (7) également disposés de façon répartie sur la périphérie pour le logement des tubes de refroidissement (4, 4'),
dans lequel un élément terminal (8) est disposé respectivement sur les deux côtés frontaux du paquet de tôles de stator (3) et plusieurs canaux de refroidissement (9) sont formés dans les deux éléments terminaux (8), par lesquels chaque fois deux tubes de refroidissement (4, 4') disposés l'un à côté de l'autre en direction périphérique sont raccordés en écoulement l'un à l'autre,
**caractérisé en ce que**
les canaux de refroidissement (9) présentent respectivement deux parties (9a, 9b) s'étendant sous un angle a l'une par rapport à l'autre, dans lequel les deux parties (9a, 9b) présentent la plus grande distance sur le côté tourné vers le côté frontal du paquet de tôles de stator (3) et sont raccordées l'une à l'autre sur le côté détourné du côté frontal du paquet de tôles de stator (3).

2. Stator (1) selon la revendication 1, **caractérisé en ce que** l'angle a entre les parties (9a, 9b) vaut moins de 90°.

3. Stator (1) selon une revendication 1 ou 2, **caractérisé en ce que** les tubes de refroidissement individuels (4, 4') présentent une plus grande longueur que le paquet de tôles de stator (3), **en ce qu'**ils dépassent avec leurs extrémités sur les deux cotés frontaux du paquet de tôles de stator (3) et **en ce qu'**ils pénètrent respectivement dans les canaux de refroidissement (9) dans les éléments terminaux (8).

4. Stator (1) selon l'une quelconque des revendications 1 à 3, **caractérisé en ce que** des rainures d'étanchéité (12) sont formées dans les éléments terminaux (8), et entourent de façon concentrique les extrémités des tubes de refroidissement (4, 4') et **en ce qu'**un élément d'étanchéité, en particulier un joint torique (13), est disposé respectivement dans les rainures d'étanchéité (12).

5. Stator (1) selon l'une quelconque des revendications 1 à 4, **caractérisé en ce qu'**exactement autant de rainures (6) que d'évidements (7) sont formés dans les tôles individuelles (2) et **en ce que** les évidements (7) sont disposés en direction périphérique des tôles (2) entre deux rainures (6) et sont décalés radialement vers l'extérieur par rapport aux rainures (6).

6. Stator (1) selon l'une quelconque des revendications 1 à 5, **caractérisé en ce que** les tubes de refroidissement (4, 4') et les évidements (7) dans les tôles (2) présentent respectivement une section transversale circulaire et **en ce que** le diamètre extérieur des tubes de refroidissement (4, 4') correspond au diamètre intérieur des évidements (7), dans lequel les tubes de refroidissement (4, 4') sont pressés contre les évidements (7) par une déformation des tubes de refroidissement (4, 4').

7. Stator (1) selon l'une quelconque des revendications 1 à 6, **caractérisé en ce que** les tôles individuelles (2) sont collées et/ou surmoulées les unes aux autres.

8. Stator (1) selon l'une quelconque des revendications 1 à 7, **caractérisé en ce que** le paquet de tôles de stator (3) et les deux éléments terminaux (8) sont serrés les uns aux autres par des tirants (19).

9. Procédé de fabrication d'un stator (1) selon la revendication 6, **caractérisé en ce que** l'on introduit les tubes de refroidissement (4, 4'), qui présentent d'abord un diamètre extérieur qui est plus petit que le diamètre intérieur des évidements (7) dans les tôles (2), dans les évidements (7) dans les tôles (2) assemblées les unes aux autres en un paquet de tôles de stator (3) et on élargit ensuite les tubes de refroidissement individuels (4, 4') à l'aide d'un outil spécial, en particulier une bille, de telle manière que le diamètre extérieur des tubes de refroidissement (4, 4') corresponde au diamètre intérieur des évidements (7) et que les tubes de refroidissement (4, 4') s'appliquent sur la paroi intérieure des évidements individuels (7).

10. Moteur électrique avec un stator (1) selon l'une quelconque des revendications 1 à 8 et un rotor, qui est entouré de façon concentrique par le stator (1), dans lequel une multiplicité d'aimants sont disposés à la périphérie extérieure du rotor.
